# EUROPÄISCHE PATENTANMELDUNG

(11) **EP 1 428 846 A2**
(43) Veröffentlichungstag der Anmeldung: **16.06.2004**
(21) Anmeldenummer: 03103834.2
(22) Anmeldetag: 16.10.2003
(51) Int. Cl.: C08F 283/02, C09D 151/08, C09J 151/08

(54) **Polymermodifizierte Harze**

(30) Priorität: 14.12.2002 DE 10258573
(71) Anmelder: Degussa AG, 40474 Düsseldorf (DE)
(72) Erfinder: Glöckner, Patrick, Dr., 40885 Ratingen (DE); Franzmann, Giselher, Dr., 58453 Witten (DE); Weiss, Jörn Volker, 45721 Haltern am See (DE); Schmitthenner, Martin, Dr., 58300 Wetter (DE)

(57) **Zusammenfassung**

Die Erfindung betrifft polymermodifizierte Harze aus einem hydroxyfunktionellen Polyester mit Dicidol in der Alkoholkomponente und hydroxyfunktionellem oder carbonsäuregruppenhaltigem Polyacrylat.

## Beschreibung

Die Erfindung betrifft polymermodifizierte Harze aus einem hydroxyfunktionellen Polyester mit Dicidol in der Alkoholkomponente und einem hydroxyfunktionellen oder carbonsäuregruppenhaltigen Polyacrylat.

Üblicherweise sind verschiedene Polymere nicht oder nur schwer miteinander mischbar, da die Gibbs'sche Mischungsenthalpie von Polymeren im Allgemeinen positiv ist. Dies ist ein Grund, weshalb Polyester mit Polyacrylaten oft nicht mischbar und unverträglich sind. Durch die Polymerisation von Acrylat-Monomeren in eine Polyestermatrix können allerdings stabile Mischungen hergestellt werden.

Die EP 184 761 beschreibt ein niedermolekulares, flüssiges Reaktionsprodukt aus einem hydroxygruppenhaltigen Polyacrylat, hergestellt in einem Polyesterpolyol. Nachteil derartiger Produkt ist das geringe Molekulargewicht und damit verbunden, eine unbefriedigende Haftung auf Substraten. Die EP 206 072 beschreibt ein semikontinuierliches Verfahren zur Herstellung der oben genannten Produkte bei mindestens 150°C.

Die EP 896 991 beschreibt ein Acrylat-Mischcopolymerisat wobei der Anteil des Copolymerisats, bestehend aus einem Polyester, unter 10 % beträgt.

Der beschriebene Polyester besitzt OH-Zahlen zwischen 50 und 350 mg KOH/g und Säurezahlen zwischen 1 und 50 mg KOH/g.

Aus der EP 607 792 sind wasserverdünnbare Polyester-Polyacrylat-Polymere bekannt, wobei das Polyacrylat aus seinen Monomeren in Gegenwart des Polyesters radikalisch hergestellt wird. Die verwendeten Polyester sind ebenfalls relativ niedermolekular, da OH-Zahlen zwischen 100 und 600 mg KOH/g und Säurezahlen zwischen 0 und 15 mg KOH/g liegen.

Das geringe Molekulargewicht bedingt durch die relativ hohen OH-Zahlen bzw. Säurezahlen derartiger Polyester führt erfahrungsgemäß zu schlechteren Haftungseigenschaften auf Substraten sowie zu schlechteren mechanischen Eigenschaften wie z.B. Flexibilität.

In der EP 541 604 (WO 92/02590) werden Überzugsmittel auf Basis hydroxygruppenhaltiger Bindemittel aus Polyestern und Polyacrylaten offenbart, wobei die Polyacrylate zumindest teilweise im Polyester hergestellt werden und Isocyanate als Vernetzer enthalten sind.

Nach dem selben Herstellungsprinzip werden gemäß EP 776 920 (DE 195 44 737) spezielle Bindemittel auf Polyester-Acrylat-Basis beschrieben.

In keinem dieser Dokumente werden dicidolhaltige Polyester verwendet.

Aufgabe der vorliegenden Erfindung war es, neue Polyester-Acrylat-Zusammensetzungen zu finden, die die bekannten Vorteile der Polyacrylate und der Polyester in sich vereinigen.

Hierzu sollten Zusammensetzungen gefunden werden, die als Bindemittelkomponente in Beschichtungsstoffen verwendet werden können, wodurch Beschichtungen erhalten werden, die ein hohes Maß an Flexibilität bei sehr guten Härteeigenschaften besitzen. Gleichzeitig sollte die Haftung der Beschichtung auf Substraten sehr hoch sein. Zusätzlich sollten mit den Produkten hohe Deckfähigkeiten pigmentierter Beschichtungsstoffe und hohe Glanzgrade der erhaltenen Beschichtungen sowie eine hohe Füllkraft erzielt werden. Darüber hinaus war es Aufgabe der vorliegenden Erfindung Polyester-Polyacrylate zu finden, welche Beschichtungen ergeben, die eine hohe Chemikalienbeständigkeit, eine gute Sterilisationsfestigkeit sowie eine sehr hohe Bewitterungsstabilität besitzen. Nicht zuletzt war es Aufgabe der vorliegenden Erfmdung, durch Einsatz der im Vergleich zu Polyesterrohstoffen billigeren Acrylat-Rohstoffe eine Verbilligung des Gesamtsystems herbeizuführen.

Es wurde gefunden, dass die polymermodifizierten Harze gemäß der Erfmdung die geforderten Kriterien erfüllen. Insbesondere war es überraschend, dass durch die spezielle Alkoholkomponente Dicidol die Eigenschaften dieser Harze positiv beeinflusst werden konnten. Ebenfalls war es überraschend, dass durch die Verwendung von Dicidol die Härte der erhaltenen Beschichtungen erhöht werden konnte, ohne dass die Flexibilität zu stark herabgesetzt wurde. Außerdem wirkt sich die Verwendung von Dicidol positiv auf Haftung, Glanz und Chemikalienbeständigkeit aus.

Gegenstand der Erfindung sind polymermodifizierte Harze aus
I. mindestens einem hydroxyfunktionellen Polyester und
II. mindestens einem hydroxyfunktionellen und/oder carbonsäuregruppenhaltigen Polyacrylat,
dadurch gekennzeichnet,
dass der Polyester I. einen Anteil an Dicidol in der Alkoholkomponente von 0,5 bis 80 mol-% aufweist,
und das Harz erhalten wird durch radikalische Polymerisation der Ausgangskomponente(n) zur Herstellung von II. in Gegenwart des Polyesters I. in mindestens einem organischen Lösemittel.

### Polyester I.

Der erfindungswesentliche Polyester wird nach bekannten Verfahren durch Kondensation hergestellt. Der eingesetzte Polyester besteht aus einem Di- und/oder Polycarbonsäuregemisch und einem Di- oder Polyolgemisch. Gegebenenfalls können Anteile des Di- bzw. Polycarbonsäuregemisches zum Teil durch Monocarbonsäuren ausgetauscht werden.

Im einzelnen können übliche Carbonsäuren und deren veresterbare Derivate verwendet werden, wie z. B. Phthalsäure, Isophthalsäure, Terephthalsäure, 1,2- und 1,4-Cyclohexandicarbonsäure, Bernsteinsäure, Sebazinsäure, Methyltetra-, Methylhexahydrophthalsäure, Tetrahydrophthalsäure, Dodecandisäure, Adipinsäure, Azelainsäure, Naphthalindicarbonsäure, Pyromellitsäure und/oder Trimellitsäure, deren Säureanydride und/oder niedrige Alkylester wie z. B. Methylester.

Bevorzugt eingesetzt werden Phthalsäure, Isophthalsäure, Terephthalsäure und 1,2-Cyclohexandicarbonsäure, Adipinsäure, Bernsteinsäure, Dodecandisäure, Sebazinsäure deren Säureanhydride und/oder veresterbare Derivate.

Als erfindungswesentliche Komponente enthält der Polyester 0,5 bis 80 mol-%, bevorzugt 1 bis 50 mol-%, besonders bevorzugt 3 bis 25 mol-%, Dicidol in der Alkoholkomponente.

Prinzipiell sind beliebige technisch herstellbare Dicidolgemische aus XY-Bis(hydroxymethyl)tricyclo[5.2.2.0^{2,6}]decan und/oder trimere und/oder höhere isomere Dicidole des Diels-Alder-Umsetzungsproduktes aus Cyclopentadien einsetzbar.

Das verwendete Dicidol besteht bevorzugt aus einem Gemisch der isomeren Verbindungen 3,8-Bis(hydroxymethyl)tricyclo[5.2.1.0^{2,6}]decan, 4,8-Bis(hydroxymethyl)tricyclo[5.2.1.0^{2,6}] decan und 5,8-Bis(hydroxymethyl)tricyclo[5.2.1.0^{2,6}]decan, wobei jedes Isomere zu einem Anteil von 20 bis 40 % in dem Gemisch enthalten sein kann und die Summe der drei Isomeren 90 bis 100 % ergibt.

Außerdem können bis zu 10 % weitere Isomere des Dicidols und/oder trimere und/oder höhere isomere Dicidole des Diels-Alder-Umsetzungsproduktes aus Cyclopentadien enthalten sein.

Als weitere Alkohole werden z. B. Ethylenglykol, 1,2- und/oder 1,3-Propandiol, Diethylen-, Dipropylen-, Triethylen-, Tetraethylenglykol, 1,2- und/oder 1,4-Butandiol, 1,3-Butylethylpropandiol, 1,3-Methylpropandiol, 1,5-Pentandiol, Cyclohexandimethanol, Glycerin, Hexandiol, Neopentylglycol, Trimethylolethan, Trimethylolpropan und/oder Pentaerythrit, Bisphenol A, B, C, F, Norbornylenglykol, 1,4-Benzyldimethanol und -ethanol, 2,4-Dimethyl-2-ethylhexan-1,3-diol eingesetzt, bevorzugt 1,4-Butandiol, Cyclohexandimethanol, Hexandiol, Neopentylglycol, Trimethylolpropan, Ethylenglykol.

Der Polyester I. enthält in einer bevorzugten Ausführungsform die folgende Zusammensetzung:

| mol-% | Einsatzstoffe |
|---|---|
| Säurekomponente | |
| 60-100 | (Cyclo)aliphatische Dicarbonsäure |
| 0 - 40 | aromatische Dicarbonsäure |
| 0 - 40 | weitere (cyclo)aliphatische Dicarbonsäure |
| 0 - 10 | höherfunktionelle Carbonsäure |
| | |

| Alkoholkomponente | |
|---|---|
| | |
| 10 - 60 | Neopentylglykol |
| 10 - 60 | Monoethylenglykol |
| 0 - 20 | Trimethylolpropan |
| 0,5 bis 80 | Dicidol |
| 0 - 79,5 | weitere (cyclo)aliphatische Alkoholkomponente |

Der Polyester I. enthält in einer besonders bevorzugten Ausführungsform die folgende Zusammensetzung:

| mol-% | Einsatzstoffe |
|---|---|
| Säurekomponente | |
| 60-100 | 1,2-Cyclohexandicarbonsäureanhydrid |
| 0 - 40 | aromatische Dicarbonsäure |
| 0 - 40 | weitere (cyclo)aliphatische Dicarbonsäure |
| 0-10 | höherfunktionelle Carbonsäure |
| | |

| Alkoholkomponente | |
|---|---|
| | |
| 10 - 60 | Neopentylglykol |
| 10 - 60 | Monoethylenglykol |
| 0 - 20 | Trimethylolpropan |
| 0,5 bis 80 | Dicidol |
| 0 - 79,5 | weitere (cyclo)aliphatische Alkoholkomponente |

Dabei ist die Summe der Säurekomponente und die der Alkoholkomponente jeweils für sich 100 mol-%.

Der Polyester wird durch Veresterung der Säurekomponenten mit den Alkoholkomponenten und anschließender Polykondensation hergestellt. Hierzu werden die Bestandteile gemischt und langsam erwärmt (geschmolzen), wobei dann unter Wasserabspaltung verestert wird. Die bevorzugte Reaktionstemperatur liegt zwischen 180 und 260 °C. In der Endphase wird Vakuum angelegt, wodurch dann auch Diole abgespalten werden und das Molekulargewicht deutlich erhöht wird. Zum Teil können Katalysatoren verwendet werden. Als Endkennwerte dienen Säurezahl und OH-Zahl.

Der unter I. genannte Polyester besitzt
- eine OH-Zahl von 5 bis 250 mg KOH/g, bevorzugt 10 bis 150 mg KOH/g, besonders bevorzugt 30 bis 50 mg KOH/g,
- eine Säurezahl von 0 bis 30 mg KOH/g, bevorzugt 0 bis 5 mg KOH/g, besonders bevorzugt von 0 bis 2 mg KOH/g,
- eine Tg von -30 bis +100 °C, bevorzugt -20 bis +40 °C, besonders bevorzugt von -10 bis +20 °C,
- eine dynamische Viskosität als 75%ige Lösung in Solvesso 150 von 1 bis 40 Pa·s, bevorzugt 1 bis 20, besonders bevorzugt von 1 bis 10,
- eine OH-Funktionalität (Verzweigung) von 1 bis 10, bevorzugt 2 bis 5, besonders bevorzugt von 2 bis 4.

Das Polyacrylat II. enthält Hydroxygruppen und/oder Carbonsäuregruppen und kann ein Copolymerisat von ethylenisch ungesättigten Monomeren, wie in der DE 199 63 586 beschrieben, sein.

Bevorzugt verwendete Monomere sind Styrol, Acrylsäure und/oder Methacrylsäure, C1-C40-Alkylester der Methacrylsäure und/oder Acrylsäure, Hydroxyalkylacrylate und/oder Hydroxyalkylmethacrylate. Besonders bevorzugt verwendete Monomere sind Styrol, Acrylsäure und/oder Methacrylsäure, Methylmethacrylat, 2-Hydroxyethylacrylat, 2-Hydroxyethylmethacrylat, Butylacrylat und/oder Butylmethacrylat.

Bei der Auswahl der Monomere ist es grundsätzlich, dass mindestens ein Monomer zur Herstellung der Polyacrylate II. eingesetzt wird, welches über Hydroxygruppen und/oder Carbonsäuregruppen verfügt, um die unten näher angegebenen OH- und Säurezahlen zu erreichen.

Das Polyacrylat II. besitzt
- eine OH-Zahl von 0 bis 300 mg KOH/g, bevorzugt 20 bis 150 mg KOH/g, besonders bevorzugt von 40 bis 140 mg KOH/g,
- eine Säurezahl von 0 bis 300 mg KOH/g, bevorzugt 0 bis 50 mg KOH/g, besonders bevorzugt von 0 bis 20 mg KOH/g,
- eine Tg von -40 bis +120 °C, bevorzugt -30 bis +40 °C, besonders bevorzugt von -20 bis +30 °C,
- eine dynamische Viskosität als 60%ige Lösung in Solvesso 150 von 0,2 bis 40 Pa·s, bevorzugt 0,5 bis 15, besonders bevorzugt von 0,5 bis 10 Pa·s,
- ein Mn von 1 000 bis 100 000 g/mol, bevorzugt 1 000 bis 10 000 g/mol, besonders bevorzugt von 1 000 bis 6 000 g/mol,
- ein Mw von 2 000 bis 1 000 000 g/mol, bevorzugt 3 000 bis 100 000 g/mol, besonders bevorzugt von 5 000 bis 20 000 g/mol.

Das Polyacrylat II. enthält in einer bevorzugten Ausführungsform folgende Zusammensetzung:

| mol-% | Einsatzstoffe |
|---|---|
| 10 - 40 | Butylacrylat und/oder Butylmethacrylat |
| 10 - 40 | Hydroxyethylacrylat und/oder Hydroxyethylmethacrylat |
| 10 - 80 | Methylmethacrylat |
| 0 - 50 | Styrol |
| 0-70 | weitere α, β-ungesättigte Monomere |

Die polymermodifizierten Harze aus I. und II. werden hergestellt, indem der unter I. beschriebene, dicidolhaltige Polyester als Lösung in einem organischen Lösemittel oder einem Lösemittelgemisch vorgelegt wird. In Stickstoffatmosphäre wird unter Rühren auf eine bevorzugte Temperatur von 100 bis 200 °C erwärmt, besonders bevorzugt von 120 bis 180 °C und sehr bevorzugt von 130 bis 160 °C. Dann wird eine Monomermischung (wie unter II. beschrieben), in der zuvor Initiatoren (aus der Gruppe der Peroxide, Hydroperoxide, Azoverbindungen und/oder CC-spaltenden Verbindungen) gelöst wurden, innerhalb von 2 - 6 h zudosiert. Nach etwa 2 weiteren Stunden Rühren bei Reaktionstemperatur wird mit etwas Initiator nachinitiiert und für weitere 2 bis 4 h gerührt.

Es resultiert ein in organischen Lösemitteln homogen lösliches Harzgemisch, dessen Feststoffanteil (99 bis 30 Gew.-%, bevorzugt 85 bis 50 Gew.-%, besonders bevorzugt 80 bis 65 Gew.-%) sich zusammensetzt aus 10 bis 90 Gew.-%, bevorzugt 30 bis 80 Gew.-%, besonders bevorzugt 60 bis 80 Gew.-% Polymer I. (Polyester) und 90 bis 10 Gew.-%, bevorzugt 70 bis 20 Gew.-%, besonders bevorzugt 40 bis 20 Gew.-% Polymer II. (Polyacrylat).

Beispiele für bevorzugte Lösemittel sind Xylol, Solvesso 100 und/oder Solvesso 150.
Die erfindungsgemäßen polymermodifizierten Harze weisen auf:
- eine OH-Zahl von 0 bis 250 mg KOH/g, bevorzugt 20 bis 150 mg KOH/g, besonders bevorzugt von 40 bis 140 mg KOH/g,
- eine Säurezahl von 0 bis 200 mg KOH/g, bevorzugt 0 bis 50 mg KOH/g, besonders bevorzugt von 0 bis 20 mg KOH/g,
- eine Tg von -40 bis +120 °C, bevorzugt -30 bis +40 °C, besonders bevorzugt von -20 bis +30 °C,
- eine dynamische Viskosität als 60%ige Lösung in Solvesso 150 von 0,2 - 40 Pa·s, bevorzugt 0,5 bis 15 Pa·s, besonders bevorzugt von 0,5 bis 10 Pa·s.

Die erfindungsgemäßen polymermodifizierten Harze werden in Überzugsmitteln und Klebstoffen als Bindemittel verwendet und bevorzugt mit Amin-Formaldehydharzen oder Polyisocyanaten vernetzt.

Gegenstand der Erfindung ist somit auch die Verwendung der polymermodifizierten Harze als Bindemittel in Klebstoffen und Überzugsmitteln .

### Beispiele

Die mol-% der Carbonsäurekomponente und der Alkoholkomponente sind getrennt auf 100 mol-% normiert. Die Summe der Mole Alkohol ist für einen Hydroxyfunktionellen Polyester größer als die Summer der Mole der Carbonsäurekomponente.

### Beispiel 1

### Herstellung Polyester I., dicidolhaltig

560 g 1,2-Cyclohexandicarbonsäureanhydrid und 80 g Sebazinsäure wurden mit 90 g Ethylenglykol, 80 g Dicidol, 160 g Neopentylglykol, 50 g 1,6-Hexandiol und 60 g Trimethylolpropan versetzt und aufgeschmolzen und in Stickstoffatmosphäre bei Temperaturen bis zu 245 °C zur Reaktion gebracht bis ca. 95 % der theoretisch berechneten Menge Wasser abdestilliert waren. Dann wurde Vakuum angelegt und bis zu einer OH-Zahl von 55 mg KOH/g sowie einer Säurezahl unter 1 mg KOH/g kondensiert. Die Polyesterschmelze wurde 75%ig in Solvesso 150 gelöst.
Endkennzahlen:
OH-Zahl = 55 mg KOH/g, Säurezahl ≤ 1 mg KOH/g
Mₙ = 4.200 g/mol
Glasübergangstemperatur = + 14 °C
dyn. Viskosität, 75%ig in Solvesso 150 bei 23 °C = 28 Pa·s

### Beispiel A) (Vergleich)

### Herstellung Polyester, dicidolfrei

580 g 1,2-Cyclohexandicarbonsäureanhydrid und 90 g Sebazinsäure wurden mit 110 g Ethylenglykol, 160 g Neopentylglykol, 80 g 1,6-Hexandiol und 60 g Trimethylolpropan versetzt und aufgeschmolzen und in Stickstoffatmosphäre bei Temperaturen bis zu 245 °C zur Reaktion gebracht bis ca. 95 % der theoretisch berechneten Menge Wasser abdestilliert waren. Dann wurde Vakuum angelegt und bis zu einer OH-Zahl von 55 mg KOH/g sowie einer Säurezahl unter 1 mg KOH/g kondensiert. Die Polyesterschmelze wurde 75%ig in Solvesso 150 gelöst.
Endkennzahlen:
OH-Zahl = 54 mg KOH/g, Säurezahl ≤ 1 mg KOH/g
Mₙ = 4.100 g/mol
Glasübergangstemperatur = 0 °C
dyn. Viskosität, 75%ig in Solvesso 150 bei 23 °C = 29 Pa·s

### Herstellung der Harze

### Beispiel 2

540 g der Polyesterlösung aus Beispiel 1 und 210 g Solvesso 150 wurden vorgelegt und unter leichtem Stickstoffstrom unter Rühren auf T = 145°C erhitzt.
Dann wurde unter Rühren eine Mischung bestehend aus 35,7 g Butylacrylat, 63,8 g 2-Hydroxyethylmethacrylat, 101,1 g Methylmethacrylat, 14,5 g Solvesso 150, 6,6 g Di-tert.-Butylperoxid sowie 7,0 g Dicumylperoxid innerhalb von 6 h kontinuierlich zugetropft.
Der Ansatz wurde 4 h bei 145 °C nachpolymerisiert, dann auf T = 50 °C gekühlt und die Lösung über ein Filtersieb von Verunreinigungen befreit.
**Endkennzahlen:**
OH-Zahl = 81 mg KOH/g, Säurezahl ≤ 1 mg KOH/g
nichtflüchtiger Anteil: 63 Gew.-%
dyn. Viskosität, 63%ig in Solvesso 150 bei 23 °C = 1600 mPa·s

### Beispiel B) (Vergleich)

540 g der Polyesterlösung aus Beispiel A und 210 g Solvesso 150 wurden vorgelegt und unter leichtem Stickstoffstrom unter Rühren auf T = 145 °C erhitzt.
Dann wurde unter Rühren eine Mischung bestehend aus 35,7 g Butylacrylat, 63,8 g 2-Hydroxyethylmethacrylat, 101,1 g Methylmethacrylat, 14,5 g Solvesso 150, 6,6 g Di-tert.-Butylperoxid sowie 7,0 g Dicumylperoxid innerhalb von 6 h kontinuierlich zugetropft.
Der Ansatz wurde 4 h bei 145 °C nachpolymerisiert, dann auf T = 50 °C gekühlt und die Lösung über ein Filtersieb von Verunreinigungen befreit.

### Endkennzahlen:

OH-Zahl = 82 mg KOH/g, Säurezahl ≤ 1 mg KOH/g
nichtflüchtiger Anteil: 64 Gew.-%
dyn. Viskosität, 63%ig in Solvesso 150 bei 23 °C = 1850 mPa·s

### Lacke

35,0 Gew.-% des Harzes aus Beispiel 2 bzw. der Polyesterlösung B) wurden vorgelegt. Unter dem Dissolver wurden langsam 0,2 Gew.-% Aerosil 200 (Degussa AG), 28,0 Gew.-% Titandioxid (Kronos 2310) und 1,4 Gew.-% Disparlon L 1983 (50 % in Solvesso 200, Erbslöh) unter Rühren zugegeben. Dann wurde bis zu einer Maximaltemperatur von 55 °C vordispergiert und mit 5,4 Gew.-% Solvesso 150 verdünnt. Nach dem Hauptdispergieren (Korngröße < 10 µm) wurden 11,5 Gew.-% der Polyesterlösung A) bzw. der Polyesterlösung B), 7,5 Gew.-% Cymel 303 (methyloliertes Melamin-Formaldehydharz, Cyanamid), 0,8 Gew.-% Katalysator BL 1203 (Degussa AG) sowie 0,2 Gew-% Nacure 2522 (Worlee) und 7,0 Gew-% Methoxypropylacetat zugesetzt. Mit 3,2 Gew.-% Solvesso 100 wurde eine DIN-Auslaufzeit von ca. 100 s ± 10 s eingestellt.

Die beiden Lacke wurden mit einem 40 µm Rakel auf Aluminiumbleche (0,57 mm) aufgezogen und 30 s bei 232 °C PM eingebrannt (Schichtstärke ca. 20µm).

In beiden Fällen ist der Verlauf sehr gut. Unterschiede diesbezüglich sind nicht zu erkennen.
In der unten dargestellten Tabelle sind weitere Ergebnisse zusammengestellt.

| | **Lack aus Bsp. 2, dicidolhaltig** | **Lack aus Bsp. B), dicidolfrei** |
|---|---|---|
| Glanz (60°) | 89 | 78 |
| Haftung | GT 0 | GT 1 |
| T-Bend | 0,5 T | 0,5 T |
| Impact - Test (inch lbs) | 50 | 40 |
| Münzkratztest | härter | leichtes Metal marking |
| Bleistifthärte | H | HB-F |
| Eindruckhärte nach Buchholz | 100 | 71 |
| MEK-Test (DH) | > 150 | > 100 |
| Rußtest (15', 80 °C) | 0 | 0 - 1 |

## Patentansprüche

1. Polymermodifizierte Harze aus
I. mindestens einem hydroxyfunktionellen Polyester und
II. mindestens einem hydroxyfunktionellen und/oder carbonsäuregruppenhaltigen Polyacrylat,
**dadurch gekennzeichnet,**
**dass** der Polyester I. einen Anteil an Dicidol in der Alkoholkomponente von 0,5 bis 80 mol-% aufweist,
und das Harz erhalten wird durch radikalische Polymerisation der Ausgangskomponente(n) zur Herstellung von II. in Gegenwart des Polyesters I. in mindestens einem organischen Lösemittel.

2. Polymermodifizierte Harze nach Anspruch 1, **dadurch gekennzeichnet,**
**dass** der Polyester I. eine OH-Zahl von 5 bis 250 mg KOH/g, eine Säurezahl von 0 bis 30 mg KOH/g, einen Tg von -30 bis 60 °C, eine dynamische Viskosität (75%ige Lösung in Solvesso 150) von 1 bis 40 Pa·s und eine OH-Funktionalität von 1 bis 10 aufweist.

3. Polymermodifizierte Harze nach Anspruch 1, **dadurch gekennzeichnet,**
**dass** der Polyester I. eine OH-Zahl von 10 bis 150 mg KOH/g, eine Säurezahl von 0 bis 5 mg KOH/g, einen Tg von -20 bis 40 °C, eine dynamische Viskosität (75%ige Lösung in Solvesso 150) von 1 bis 20 Pa·s und eine OH-Funktionalität von 2 bis 5 aufweist.

4. Polymermodifizierte Harze nach Anspruch 1, **dadurch gekennzeichnet,**
**dass** der Polyester I. eine OH-Zahl von 30 bis 50 mg KOH/g, eine Säurezahl von 0 bis 2 mg KOH/g, einen Tg von -10 bis 20 °C, eine dynamische Viskosität (75%ige Lösung in Solvesso 150) von 1 bis 10 Pa·s und eine OH-Funktionalität von 2 bis 4 aufweist.

5. Polymermodifizierte Harze nach mindestens einem der Ansprüche 1 bis 4,
**dadurch gekennzeichnet,**
**dass** als Dicidol beliebige Isomerengemische von XY-Bis(hydroxymethyl) tricyclo[5.2.2.0^{2,6}]decan eingesetzt werden.

6. Polymermodifizierte Harze nach mindestens einem der Ansprüche 1 bis 4,
**dadurch gekennzeichnet,**
**dass** ein Dicidolgemisch der isomeren Verbindungen 3,8-Bis(hydroxymethyl)tricyclo [5.2.1.0^{2,6}]decan, 4,8-Bis(hydroxymethyl)tricyclo [5.2.1.0^{2,6}]decan und 5,8-Bis(hydroxymethyl)tricyclo [5.2.1.0^{2,6}]decan,
wobei jedes Isomere zu einem Anteil von 20 bis 40 % in dem Gemisch enthalten sein kann und die Summe der drei Isomeren 90 bis 100 % ergibt, eingesetzt wird.

7. Polymermodifizierte Harze nach Anspruch 5 oder 6,
**dadurch gekennzeichnet,**
**dass** bis zu 10 % weitere Isomere des Dicidols und/oder trimere und/oder höhere isomere Diole des Diels-Alder-Umsetztungsprodukte aus Cyclopentadien enthalten sind.

8. Polymermodifizierte Harze nach mindestens einem der Ansprüche 1 bis 7,
**dadurch gekennzeichnet,**
**dass** als weitere Alkoholkomponente des Polyesters I. Verbindungen ausgewählt aus Ethylenglykol, 1,2-, 1,3-Propandiol, Diethylen-, Dipropylen-, Triethylen-, Tetraethylenglykol, 1,2-, 1,4-Butandiol, 1,3-Butylethylpropandiol, 1,3-Methylpropandiol, 1,5-Pentandiol, Cyclohexandimethanol, Glycerin, Hexandiol, Neopentylglycol, Trimethylolethan, Trimethylolpropan, Pentaerythrit, Bisphenol A, B, C, F, Norbomylenglykol, 1,4-Benzyldimethanol, -ethanol, 2,4-Dimethyl-2-ethylhexan-1,3-diol, allein oder in Mischungen, eingesetzt werden.

9. Polymermodifizierte Harze nach mindestens einem der Ansprüche 1 bis 8,
**dadurch gekennzeichnet,**
**dass** als Säurekomponente des Polyesters I. Verbindungen ausgewählt aus Phthalsäure, Isophthalsäure, Terephthalsäure, 1,2-, 1,4-Cyclohexandicarbonsäure, Bernsteinsäure, Sebazinsäure, Methyltetra-, Methylhexahydrophthalsäure, Tetrahydrophthalsäure, Dodecandisäure, Adipinsäure, Azelainsäure, Naphthalindicarbonsäure, Pyromellitsäure, Trimellitsäure, deren Säureanhydride und/oder niedrige Alkylester, allein oder in Mischungen, eingesetzt werden.

10. Polymermodifizierte Harze nach mindestens einem der Ansprüche 1 bis 9,
**dadurch gekennzeichnet,**
**dass** das Polyacrylat II. eine OH-Zahl von 0 bis 300 mg KOH/g, eine Säurezahl von 0 bis 300 mg KOH/g, einen Tg von -40 bis 100, eine dynamische Viskosität (60%ige Lösung in Solvesso 150) von 0,2 bis 40 Pa·s, ein Mn von 1 000 bis 100 000 g/mol, ein Mw von 2 000 bis 1 000 000 g/mol aufweist.

11. Polymermodifizierte Harze nach mindestens einem der Ansprüche 1 bis 9,
**dadurch gekennzeichnet,**
**dass** das Polyacrylat II. eine OH-Zahl von 20 bis 150 mg KOH/g, eine Säurezahl von 0 bis 50 mg KOH/g, einen Tg von -30 bis 40, eine dynamische Viskosität (60%ige Lösung in Solvesso 150) von 0,5 bis 15 Pa·s, ein Mn von 1 000 bis 10 000 g/mol, ein Mw von 3 000 bis 100 000 g/mol aufweist.

12. Polymermodifizierte Harze nach mindestens einem der Ansprüche 1 bis 9,
**dadurch gekennzeichnet,**
**dass** das Polyacrylat II. eine OH-Zahl von 40 bis 140 mg KOH/g, eine Säurezahl von 0 bis 20 mg KOH/g, einen Tg von -20 bis 30, eine dynamische Viskosität (60%ige Lösung in Solvesso 150) von 0,5 bis 10 Pa·s, ein Mn von 1 000 bis 6 000 g/mol, ein Mw von 5 000 bis 20 000 g/mol aufweist.

13. Polymermodifizierte Harze nach mindestens einem der Ansprüche 1 bis 12,
**dadurch gekennzeichnet,**
**dass** das Polyacrylat II. hergestellt wird aus den Monomeren Styrol, Acrylsäure, Methacrylsäure, C1-C40-Alkylester der Methacrylsäure, Acrylsäure, Hydroxyalkylacrylate, und/oder Hydroxyalkylmethacrylate, wobei immer mindestens ein hydroxygruppenhaltiges und/oder carboxylgruppenhaltiges Monomer eingesetzt wird.

14. Polymermodifizierte Harze nach Anspruch 13,
**dadurch gekennzeichnet,**
**dass** Monomere ausgewählt aus Styrol, Acrylsäure, Methacrylsäure, Methylmethacrylat, 2-Hydroxyethylacrylat, 2-Hydroxyethylmethacrylat, Butylacrylat, und/oder Butylmethacrylat, eingesetzt werden.

15. Polymermodifizierte Harze nach mindestens einem der Ansprüche 1 bis 14,
**dadurch gekennzeichnet,**
**dass** das Harz eine OH-Zahl von 0 bis 250 mg KOH/g, eine Säurezahl von 0 bis 200 mg KOH/g, einen Tg von -40 bis 120 °C, eine dynamische Viskosität (60%ige Lösung in Solvesso 150) von 0,2 bis 40 Pa·s aufweist.

16. Polymermodifizierte Harze nach mindestens einem der Ansprüche 1 bis 14,
**dadurch gekennzeichnet,**
**dass** das Harz eine OH-Zahl von 20 bis 150 mg KOH/g, eine Säurezahl von 0 bis 50 mg KOH/g, einen Tg von -30 bis 40 °C, eine dynamische Viskosität (60%ige Lösung in Solvesso 150) von 0,5 bis 15 Pa·s aufweist.

17. Polymermodifizierte Harze nach mindestens einem der Ansprüche 1 bis 14,
**dadurch gekennzeichnet,**
**dass** das Harz eine OH-Zahl von 40 bis 140 mg KOH/g, eine Säurezahl von 0 bis 20 mg KOH/g, einen Tg von -20 bis 30 °C, eine dynamische Viskosität (60%ige Lösung in Solvesso 150) von 0,5 bis 10 Pa·s aufweist.

18. Polymermodifizierte Harze nach mindestens einem der Ansprüche 1 bis 17,
**dadurch gekennzeichnet,**
**dass** das Harz aus
I. 10 bis 90 Gew.-% Polyester
und
II. 90 bis 10 Gew.-% Polyacrylat
besteht.

19. Polymermodifizierte Harze nach mindestens einem der Ansprüche 1 bis 17,
**dadurch gekennzeichnet,**
**dass** das Harz aus
I. 30 bis 80 Gew.-% Polyester
und
II. 70 bis 20 Gew.-% Polyacrylat
besteht.

20. Polymermodifizierte Harze nach mindestens einem der Ansprüche 1 bis 17,
**dadurch gekennzeichnet,**
**dass** das Harz aus
I. 60 bis 80 Gew.-% Polyester
und
II. 40 bis 20 Gew.-% Polyacrylat
besteht.

21. Polymermodifizierte Harze nach mindestens einem der Ansprüche 1 bis 20,
**dadurch gekennzeichnet,**
**dass** der Polyester I. aufgebaut ist aus den folgenden Einsatzstoffen:
| mol-% | Einsatzstoffe |
|---|---|
| Säurekomponente | |
| 60-100 | (Cyclo)aliphatische Dicarbonsäure |
| 0 - 40 | aromatische Dicarbonsäure |
| 0 - 40 | weitere (cyclo)aliphatische Dicarbonsäure |
| 0-10 | höherfunktionelle Carbonsäure |
| | |
| Alkoholkomponente | |
|---|---|
| | |
| 10 - 60 | Neopentylglykol |
| 10 - 60 | Monoethylenglykol |
| 0 - 20 | Trimethylolpropan |
| 0,5 bis 80 | Dicidol |
| 0 - 79,5 | weitere (cyclo)aliphatische Alkoholkomponente |
wobei die Summe der Säurekomponente und die der Alkoholkomponente jeweils für sich 100 mol-%.

22. Polymermodifizierte Harze nach mindestens einem der Ansprüche 1 bis 21,
**dadurch gekennzeichnet,**
**dass** der Polyester I. aufgebaut ist aus den folgenden Einsatzstoffen:
| mol-% | Einsatzstoffe |
|---|---|
| Säurekomponente | |
| 60-100 | 1,2-Cyclohexandicarbonsäureanhydrid |
| 0 - 40 | aromatische Dicarbonsäure |
| 0 - 40 | weitere (cyclo)aliphatische Dicarbonsäure |
| 0-10 | höherfunktionelle Carbonsäure |
| | |
| Alkoholkomponente | |
|---|---|
| | |
| 10 - 60 | Neopentylglykol |
| 10 - 60 | Monoethylenglykol |
| 0 - 20 | Trimethylolpropan |
| 0,5 bis 80 | Dicidol |
| 0 - 79,5 | weitere (cyclo)aliphatische Alkoholkomponente |
wobei die Summe der Säurekomponente und die der Alkoholkomponente jeweils für sich 100 mol-% beträgt.

23. Polymermodifizierte Harze nach mindestens einem der Ansprüche 1 bis 22,
**dadurch gekennzeichnet,**
**dass** das Polyacrylat II. aufgebaut ist aus den folgenden Einsatzstoffen:
| mol-% | Einsatzstoffe |
|---|---|
| 10 - 40 | Butylacrylat und/oder Butylmethacrylat |
| 10 - 40 | Hydroxyethylacrylat und/oder Hydroxyethylmethacrylat |
| 10 - 80 | Methylmethacrylat |
| 0 - 50 | Styrol |
| 0-70 | weitere α, β-ungesättigte Monomere |

24. Verfahren zur Herstellung eines polymermodifizierten Harzes aus
III. mindestens einem hydroxyfunktionellen Polyester und
IV. mindestens einem hydroxyfunktionellen und/oder carbonsäuregruppenhaltigen Polyacrylat,
wobei der Polyester I. einen Anteil an Dicidol in der Alkoholkomponente von 0,5 bis 80 mol-% aufweist,
durch radikalische Polymerisation des/der Ausgangsmonomer/e zur Herstellung von II. in Gegenwart des Polyesters I. in mindestens einem organischen Lösemittel.

25. Verwendung eines polymermodifizierten Harzes nach einem der Ansprüche 1 bis 23 als Bindemittel in Klebstoffen und Überzugsmitteln.

26. Verwendung nach Anspruch 25 als Bindemittel mit Polyisocyanaten und/oder Melamin-Formaldehydharzen als Vernetzer.
